# NEW EUROPEAN PATENT SPECIFICATION

(11) **EP 2 246 649 B2**
(45) Date of publication and mention of the opposition decision: **25.10.2023**
(45) Mention of the grant of the patent: 19.07.2017
(21) Application number: 09715074.2
(22) Date of filing: 24.02.2009
(51) Int. Cl.: F25B 1/00, C09K 5/04

(54) **REFRIGERATING APPARATUS**
KALTEAPPARAT
APPAREIL DE RÉFRIGÉRATION

(30) Priority: 29.02.2008 JP 2008050855; 18.03.2008 JP 2008070240; 15.04.2008 JP 2008105821
(43) Date of publication of application: 03.11.2010
(73) Proprietor: Daikin Industries, Ltd., Osaka 530-8323 (JP)
(72) Inventor: MORIWAKI, Michio, Sakai-shi, Osaka 591-8511 (JP); HARA, Hideki, Sakai-shi, Osaka 592-8331 (JP); FURUI, Shuji, Sakai-shi, Osaka 591-8511 (JP)
(74) Representative: Hoffmann Eitle
(86) International application number: PCT/JP2009/000800
(87) International publication number: WO 2009/107364

(56) References cited:
- EP-A1- 1 780 476
- EP-A1- 2 246 649
- EP-A1- 2 249 104
- EP-A2- 2 149 592
- WO-A1-2006/004046
- WO-A1-2008/020225
- WO-A1-2008/105256
- WO-A2-2006/069362
- WO-A2-2006/069362
- WO-A2-2006/094303
- WO-A2-2006/094303
- WO-A2-2007/086972
- WO-A2-2007/086972
- WO-A2-2008/009922
- WO-A2-2008/140809
- JP-A- 4 110 388
- JP-A- 2007 139 393
- JP-U- 3 124 123
- US-A1- 2004 118 145
- US-B1- 6 327 866
- US-B1- 6 536 225
- "Refrigerator", Wikipedia, 13 April 2018 (2018-04-13), page 19pp, Retrieved from the Internet: URL:https://en.wikipedia.org/wiki/Refriger ator [retrieved on 2018-04-17]
- A. D. ALTHOUSE et al.: "Chapter 11. Domestic Refrigerators and Freezers" In: Althouse et al.: "Modern Refrigeration and Air Conditioning", 2004 pages 387-389, 856-860, * , i.e. before the earliest priority date of the opposed patent. Therefore, D8 represents prior art under Art. 54(2) EPC. *

## Description

### TECHNICAL FIELD

The present invention relates to a refrigeration apparatus including a refrigerant circuit in which a refrigeration cycle is performed.

### BACKGROUND ART

Conventionally, a refrigeration apparatus including a refrigerant circuit in which a refrigeration cycle is performed has been broadly applied to air conditioners, hot-water supply systems, etc.

JP-A-04-110388 discloses the refrigeration apparatus of this type. The refrigeration apparatus includes a refrigerant circuit which is a closed circuit filled with refrigerant. A compressor, a condenser, an expansion valve, and an evaporator are connected to the refrigerant circuit. When operating the compressor, refrigerant compressed in the compressor is condensed by releasing heat to air in the condenser. The pressure of the refrigerant condensed in the condenser is reduced by the expansion valve, and then such refrigerant is evaporated in the evaporator. The evaporated refrigerant is sucked into the compressor to be compressed again.

In the refrigerant circuit of JP-A-04-110388, refrigerant is used, which is represented by a molecular formula C₃HₘFₙ (note that "m" and "n" are integers equal to or greater than 1 and equal to or less than 5, and a relationship represented by an expression m + n = 6 is satisfied); and which has a single double bond in a molecular structure. The refrigerant has excellent properties as refrigerant of the refrigeration cycle, and a coefficient of performance (COP) of the refrigeration apparatus has been improved. In addition, it has been known that the refrigerant does not contain chlorine atoms, bromine atoms, etc., and does not contribute to destruction of the ozone layer. Further, JP-A-04-110388 discloses refrigerant mixture (zeotropic refrigerant mixture) of the refrigerant which is represented by the above-described molecular formula, and which has the single double bond in the molecular structure, and other refrigerant (R-22, R-32, etc.).

WO 2006/094303 relates to compositions for use in refrigeration, air-conditioning, and heat pump systems wherein the composition comprises a fluoroolefin and at least one other component, including, among many alternartives, also compositions which are mixtures of 2,3,3,3-tetrafluoropropene (HFO-1234yf) and 23-21 wt.-% of difluoromethane (HFC-32). The compositions are described to be useful in processes for producing cooling or heat, as heat transfer fluids, foam blowing agents, aerosol propellants, and fire suppression and fire extinguishing agents.

WO 2006/069362 describes compositions comprising at least one iodocarbon compound as a refrigerant and preferably at least one stabilization agent comprising a diene-based compound. These compositions may include co-refrigerants including, among a broad variety of alternatives, HFO-1234yf or HFC-32. These compositions are described as being generally useful as refrigerants for heating and cooling, as blowing agents, as aerosol propellants, as solvent composition, and as fire extinguishing and suppressing agents.

### SUMMARY OF THE INVENTION

### TECHNICAL PROBLEM

As described above, the refrigerant disclosed in JP-A-04-110388 has properties including the relatively-high theoretical COP and low global warming potential (GWP). Thus, the refrigerant is used in the refrigeration cycle, thereby providing an environment-friendly refrigeration apparatus with high operational efficiency. However, the refrigerant is so-called "low-pressure refrigerant" with a relatively-high boiling point, and has properties which tend to increase an influence of a pressure loss of refrigerant in a refrigerant pipe. Thus, by using the refrigerant, input etc. of the compressor increase due to the influence of the pressure loss in the refrigerant pipe, and therefore there is a possibility that an actual operational efficiency is rather degraded. In particular, if a refrigerant pipe between the compressor and other heat exchanger is relatively long, the influence of the pressure loss is markedly increased, thereby further degrading the operational efficiency.

The present invention has been made in view of foregoing, and it is an object of the present invention to provide a refrigeration apparatus with high operational efficiency.

### SOLUTION TO THE PROBLEM

According to the present invention there is provided a refrigeration apparatus, comprising:
(i) a refrigerant circuit (11) suitable for performing a refrigeration cycle by circulating refrigerant, wherein
   - a compressor (12),
   - a heat-source-side heat exchanger (13),
   - an expansion mechanism (15), and
   - a utilization-side heat exchanger (14)
   are connected together;
(ii) in the refrigerant circuit (11), a refrigerant mixture of 77-79 wt.-% of 2,3,3,3-tetrafluoro-1-propene (HFO-1234yf) and 23-21 wt.-% of difluoromethane (HFC-32); and
(iii) a casing (10a) in which the whole of the refrigerant circuit is accommodated.

In the refrigerant circuit (11) the refrigerant has a relatively-high theoretical COP, and therefore a refrigeration cycle with a high COP can be performed in the refrigerant circuit (11) of the present invention. Further, the refrigerant has properties including relatively-lower global warming potential (GWP) as compared to that of R410A which is current mainly-used refrigerant, thereby providing an environment-friendly refrigeration apparatus. On the other hand, the refrigerant is so-called "low-pressure refrigerant," and therefore is susceptible to an influence of a pressure loss in a refrigerant pipe of the refrigerant circuit (11).

In the present invention, the whole of the refrigerant circuit (11) is accommodated in the casing (10a). This shortens the length of the refrigerant pipe from the compressor (12) to other heat exchanger (the heat-source-side exchanger (13) or the utilization-side heat exchanger (14)) in the casing (10a). Consequently, the influence of the pressure loss in the refrigerant circuit (11) can be minimized, thereby maximizing an actual operational efficiency upon the refrigeration cycle.

In one embodiment of the invention the refrigeration apparatus further includes a heat medium circuit (20, 30, 51) which is connected to the refrigerant circuit (11) through the utilization-side heat exchanger (14), and which supplies a heat medium exchanging heat with refrigerant in the utilization-side heat exchanger (14), to a predetermined heat utilization target (3, 4, 5, 6).

In another embodiment of the invention, the refrigerant circuit (11) is connected to the heat medium circuit (20, 30, 51) through the utilization-side heat exchanger (14). In the refrigerant circuit (11), the refrigeration cycle is performed by circulating the refrigerant. Consequently, in the utilization-side heat exchanger (14), the refrigerant releases heat to the heat medium of the heat medium circuit (20, 30, 51), or absorbs heat from the heat medium of the heat medium circuit (20, 30, 51). That is, in the utilization-side heat exchanger (14), heat is exchanged between the refrigerant of the refrigerant circuit (11) and the heat medium of the heat medium circuit (20, 30, 51). The heat medium cooled or heated in the utilization-side heat exchanger (14) is supplied to the predetermined heat utilization target (3, 4, 5, 6).

As described above, in the present invention, the refrigerant circuit (11) is provided separately from the heat medium circuit (20, 30, 51), and the heat medium of the heat medium circuit (20, 30, 51) is sent to the predetermined heat utilization target (3, 4, 5, 6). Thus, the length of the pipe of the refrigerant circuit (11) can be shortened while controlling the temperature of the predetermined heat utilization target (3, 4, 5, 6). Consequently, the influence of the pressure loss in the refrigerant circuit (11) can be minimized, thereby further improving the actual operational efficiency upon the refrigeration cycle.

In a further embodiment of the invention the refrigeration apparatus the heat exchanger (14) serves as a heating heat exchanger (14) for heating the heat medium of the heat medium circuit (20, 30, 51) by the refrigerant of the refrigerant circuit (11).

In the heat exchanger (14) of this embodiment, the heat medium of the heat medium circuit (20, 30, 51) is heated by the refrigerant of the refrigerant circuit (11). The heated heat medium is supplied to the predetermined heat utilization target (3, 4, 5, 6), and then is used for heating the heat utilization target (3, 4, 5, 6).

Further embodiments of the invention are as defined in the appended depending claims and/or in the following detailed description.

### ADVANTAGES OF THE INVENTION

In the present invention, a refrigerant mixture of 77-79 wt.-% of 2,3,3,3-tetrafluoro-1-propene (HFO-1234yf) and 23-21 wt.-% of difluoromethane (HFC-32) is used as the refrigerant of the refrigerant circuit (11). The refrigerant has the relatively-high theoretical COP, and therefore the theoretical COP of the refrigerant circuit (11) increases. Thus, energy conservation of the refrigeration apparatus can be improved. Further, the refrigerant has the properties including the relatively-lower global warming potential (GWP) as compared to that of R410A which is current mainly-used refrigerant, thereby providing the environment-friendly refrigeration apparatus.

In addition, in the present invention, the whole of the refrigerant circuit (11) is accommodated in the casing (10a). This shortens the length of the refrigerant pipe of the refrigerant circuit (11), thereby minimizing the influence of the pressure loss. Consequently, in the refrigeration apparatus of the present invention, the actual operational efficiency can be enhanced, thereby further improving the energy conservation of the refrigeration apparatus.

In one embodiment, the refrigerant circuit (11) is provided separately from the heat medium circuit (20, 30, 51), thereby further shortening the length of the pipe of the refrigerant circuit (11). Consequently, the influence of the pressure loss can be further minimized, thereby further enhancing the actual operational efficiency. In addition, the length of the pipe of the refrigerant circuit (11) is shortened, thereby reducing the size of the casing (10a) in which the refrigerant circuit (11) is accommodated.

According to other embodiments, the refrigeration apparatus with the high COP can heat the predetermined heat utilization target (the hot-water generators (3, 4) or the floor heater (5)), or can cool the predetermined heat utilization target (the cooler (6)). Further, in one embodiment water which is the heat medium circulates in the heat medium circuit (20, 30, 51), thereby providing the heat medium circuit (20, 30, 51) at relatively low cost.

### BRIEF DESCRIPTION OF THE DRAWINGS

[FIG. 1] FIG. 1 is a schematic configuration diagram of a refrigeration apparatus of a first embodiment.
[FIG. 2] FIG. 2 is a schematic configuration diagram of a refrigeration apparatus of a second embodiment.
[FIG. 3] FIG. 3 is a schematic configuration diagram of a refrigeration apparatus of a third embodiment.

### DESCRIPTION OF REFERENCE CHARACTERS

- 3: Faucet (Heat Utilization Target, Hot-Water Generator)
- 4: Bathtub (Heat Utilization Target, Hot-Water Generator)
- 5: Floor Heater (Heat Utilization Target)
- 6: Air Conditioning Unit (Heat Utilization Target, Cooler)
- 10: Hot-Water Supply System (Refrigeration Apparatus)
- 10a: Casing
- 11: Refrigerant Circuit
- 12: Compressor
- 13: Air-Heat Exchanger (Heat-Source-Side Heat Exchanger)
- 14: Water-Heat Exchanger (Utilization-Side Heat Exchanger, Water-Heat Exchanger)
- 15: Expansion Valve (Expansion Mechanism)
- 20: Circulation Circuit (Heat Medium Circuit)
- 30: Hot-Water Utilization Circuit (Heat Medium Circuit)
- 51: Air-Conditioning-Side Circuit (Heat Medium Circuit)

### DESCRIPTION OF EMBODIMENTS

Embodiments of the present invention will be described in detail hereinafter with reference to the drawings.

### <<First Embodiment>>

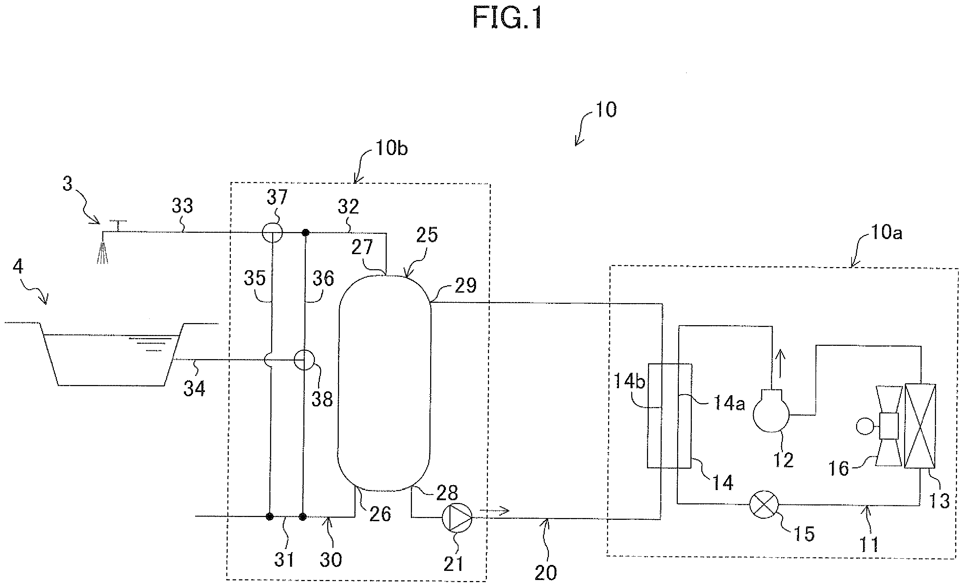

In a first embodiment, a refrigeration apparatus of the present invention serves as a hot-water supply system (10) in which hot-water generators such as a faucet (3) and a bathtub (4) are heat utilization targets. As illustrated in FIG. 1, the hot-water supply system (10) includes a refrigerant circuit (11); a circulation circuit (20); and a hot-water utilization circuit (30). The refrigerant circuit (11) is connected to the circulation circuit (20) through a water-heat exchanger (14). The circulation circuit (20) is connected to the hot-water utilization circuit (30) through a hot-water storage tank (25). The circulation circuit (20) and the hot-water utilization circuit (30) serve as a heat medium circuit for supplying hot-water to the heat utilization targets (3, 4) as a heat medium.

The refrigerant circuit (11) is a closed circuit in which a refrigeration cycle is performed by circulating refrigerant. The refrigerant circuit (11) includes a compressor (12); an air-heat exchanger (13); the water-heat exchanger (14); and an expansion valve (15). The air-heat exchanger (13) is connected to a suction side of the compressor (12), and the water-heat exchanger (14) is connected to a discharge side of the compressor (12). The expansion valve (15) is connected between the air-heat exchanger (13) and the water-heat exchanger (14).

The compressor (12) is an inverter compressor with variable operational capacity. The air-heat exchanger (13) is a cross-fin type fin-and-tube heat exchanger, and serves as a heat-source-side heat exchanger. An outdoor fan (16) is provided near the air-heat exchanger (13). The expansion valve (15) is an electric expansion valve with variable opening, and serves as an expansion mechanism.

The water-heat exchanger (14) is a plate-fin type heat exchanger, and serves as a utilization-side heat exchanger. The water-heat exchanger (14) includes a first flow path (14a) and a second flow path (14b). The first flow path (14a) is connected to the refrigerant circuit (11), and the second flow path (14b) is connected to the circulation circuit (20). That is, the circulation circuit (20) is connected to the refrigerant circuit (11) through the water-heat exchanger (14). In the water-heat exchanger (14), heat is exchanged between refrigerant flowing in the first flow path (14a) and water (heat medium) flowing in the second flow path (14b). That is, the water-heat exchanger (14) serves as a heating heat exchanger for heating water of the circulation circuit (20) by refrigerant of the refrigerant circuit (11).

A circulation pump (21) is provided in the circulation circuit (20). The circulation pump (21) serves as a pump mechanism for transferring and circulating water in the circulation circuit (20). In addition, the hot-water storage tank (25) is connected to the circulation circuit (20). The hot-water storage tank (25) is an elongated cylindrical hermetic container. A water supply port (26), a hot-water outlet port (27), a water discharge port (28), and a hot-water inlet port (29) are formed in the hot-water storage tank (25). The water supply port (26) and the water discharge port (28) are formed in a bottom section of the hot-water storage tank (25). The hot-water outlet port (27) is formed in a top section of the hot-water storage tank (25). The hot-water inlet port (29) is formed in a section closer to an upper portion of a side wall of the hot-water storage tank (25). One end of the circulation circuit (20) is connected to the hot-water inlet port (29) of the hot-water storage tank (25), and the other end is connected to the water discharge port (28) of the hot-water storage tank (25). That is, in the circulation circuit (20), water (hot water) heated in the water-heat exchanger (14) flows into the hot-water storage tank (25) through the hot-water inlet port (29), and water in the bottom section of the hot-water storage tank (25) is sucked into the circulation pump (21) through the water discharge port (28).

A water supply path (31) and a hot-water supply path (32) are formed in the hot-water utilization circuit (30). An upstream side of the water supply path (31) is connected to supply sources of water such as tap water. An outflow end of the water supply path (31) is connected to the water supply port (26) of the hot-water storage tank (25). An inflow end of the hot-water supply path (32) is connected to the hot-water outlet port (27) of the hot-water storage tank (25). An outflow side of the hot-water supply path (32) branches into two paths, and such branched paths are connected to a faucet-side flow path (33) and a bathtub-side flow path (34). An outflow end of the faucet-side flow path (33) is connected to the faucet (3), and an outflow end of the bathtub-side flow path (34) opens to an inside of the bathtub (4).

A first bypass path (35) and a second bypass path (36) are formed in the hot-water utilization circuit (30). Inflow ends of the first bypass path (35) and the second bypass path (36) are connected to the water supply path (31). An outflow end of the first bypass path (35) is connected to the faucet-side flow path (33) through a first mixing valve (37), and an outflow end of the second bypass path (36) is connected to the bathtub-side flow path (34) through a second mixing valve (38).

In the refrigeration apparatus (10), the whole of the refrigerant circuit (11) is accommodated in a casing (10a) of a heat source unit. In addition, in the refrigeration apparatus (10), the whole of the hot-water utilization circuit (30), the hot-water storage tank (25), the circulation pump (21), etc. is accommodated in a casing (10b) of a hot-water supply unit.

### Operation

When operating the hot-water supply system (10), the compressor (12) and the circulation pump (21) are in operation. Consequently, in the refrigerant circuit (11), a vapor compression refrigeration cycle is performed by circulating refrigerant.

In the refrigerant circuit (11), refrigerant compressed in the compressor (12) flows in the first flow path (14a) of the water-heat exchanger (14). In the water-heat exchanger (14), the refrigerant is cooled and condensed by water of the circulation circuit (20). The pressure of the refrigerant condensed in the water-heat exchanger (14) is reduced by the expansion valve (15), and then such refrigerant flows into the air-heat exchanger (13). In the air-heat exchanger (13), the refrigerant is evaporated by absorbing heat from outdoor air. The refrigerant evaporated in the air-heat exchanger (13) is sucked into the compressor (12) to be compressed again. As described above, in the refrigerant circuit (11), a refrigeration cycle is performed, in which the water-heat exchanger (14) serves as a condenser (radiator), and the air-heat exchanger (13) serves as an evaporator.

On the other hand, in the circulation circuit (20), water transferred by the circulation pump (21) flows in the second flow path (14b) of the water-heat exchanger (14). In the water-heat exchanger (14), the water flowing in the second flow path (14b) is heated by refrigerant flowing in the first flow path (14a). The hot-water storage tank (25) is refilled with the water (hot water) heated in the water-heat exchanger (14). This generates hot water in the hot-water storage tank (25). The hot water in the hot-water storage tank (25) is supplied to the faucet (3) and the bathtub (4) through the hot-water utilization circuit (30).

### Advantages of First Embodiment

In the present embodiment, as the refrigerant of the refrigerant circuit (11), the refrigerant containing HFO-1234yf is used. HFO-1234yf has properties including a relatively-high theoretical COP. Thus, such refrigerant is used as the single component refrigerant, thereby performing a refrigeration cycle with excellent operational efficiency. Consequently, an operational efficiency of the hot-water supply system (10) can be improved. Further, the HFO-1234yf has properties including relatively-lower global warming potential (GWP) as compared to that of R410A which is current mainly-used refrigerant, thereby providing an environment-friendly refrigeration apparatus.

On the other hand, the HFO-1234yf has a relatively-high boiling point, and serves as so-called "low-pressure refrigerant". thus resulting in an increase in input etc. of the compressor (12) due to an influence of a pressure loss of refrigerant. Consequently, there is a possibility that an actual operational efficiency is rather degraded. However, in the first embodiment, the whole of the refrigerant circuit (11) is accommodated in the casing (10a). This shortens the length of the pipe of the refrigerant circuit (11). Further, in the first embodiment, the circulation circuit (20) and the hot-water utilization circuit (30) are provided separately from the refrigerant circuit (11) to supply water heated in the water-heat exchanger (14) to the heat utilization targets (the faucet (3) and the bathtub (4)). Thus, the length of the refrigerant pipe of the refrigerant circuit (11) can be requisite minimum. Consequently, in the first embodiment, the influence of the pressure loss of refrigerant in the refrigerant circuit (11) can be minimized, thereby preventing the degradation of the actual operational efficiency due to the influence of the pressure loss in the refrigerant circuit (11).

### <<Second Embodiment>>

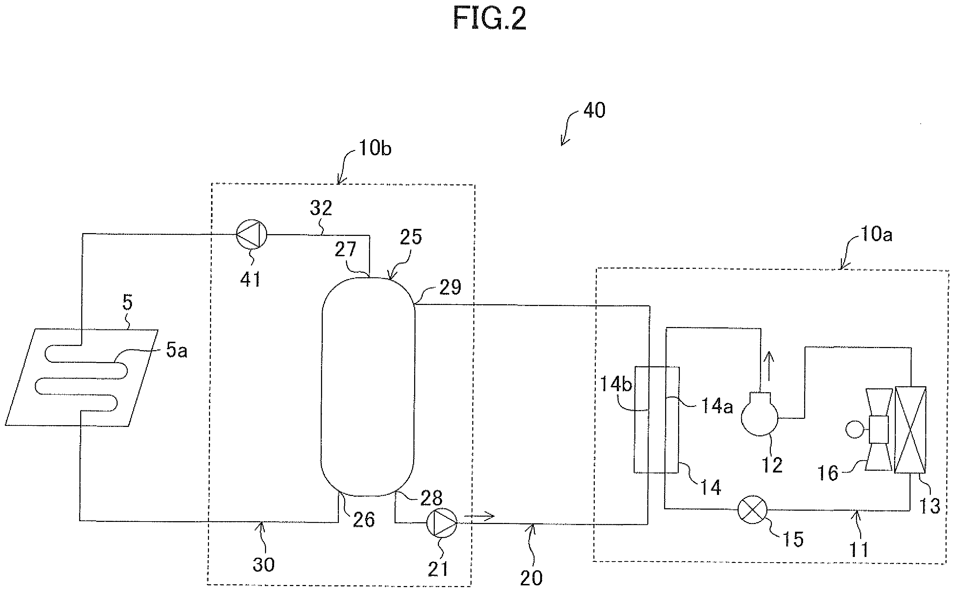

In the second embodiment, the refrigeration apparatus of the present invention serves as a floor heating system (40) in which a floor heater (5) is a heat utilization target. As illustrated in FIG. 2, the floor heating system (40) includes a refrigerant circuit (11) and a circulation circuit (20) which are similar to those in the first embodiment. In addition, the floor heating system (40) includes a hot-water utilization circuit (30) which is a closed circuit in which hot-water circulates, and the circulation circuit (20) and the hot-water utilization circuit (30) serve as a heat medium circuit.

In the second embodiment, the hot-water utilization circuit (30) includes the floor heater (5) and a circulation pump (41). The circulation pump (41) is provided on an upstream side of the floor heater (5). In addition, the floor heater (5) is installed below a floor of a room, and heats the floor by hot water. Further, the whole of the refrigerant circuit (11) is accommodated in a casing (10a) of a heat source unit.

In the second embodiment, in the circulation circuit (20) and the hot-water utilization circuit (30), water is used as a heat medium.

### Operation

When operating the floor heating system (40) of the second embodiment, a compressor (12), and two circulation pumps (21, 41) are in operation. In the refrigerant circuit (11), a refrigeration cycle similar to that of the first embodiment is performed. In the circulation circuit (20), a hot-water storage tank (25) is refilled with water heated in a water-heat exchanger (14) as necessary. The hot water drawn from the hot-water storage tank (25) into the hot-water utilization circuit (30) flows in a heat exchange section (5a) of the floor heater (5). In the heat exchange section (5a), heat of the hot water is released to a floor surface. Consequently, the floor surface is heated to heat the room.

### Advantages of Second Embodiment

In the second embodiment, the refrigerant containing HFO-1234yf is used as the refrigerant of the refrigerant circuit (11), thereby providing the floor heating system (40) with a high COP. In addition, the whole of the refrigerant circuit (11) is accommodated in the casing (10a), and the refrigerant circuit (11) is separated from the heat medium circuits (20, 30), thereby allowing the requisite minimum length of the pipe of the refrigerant circuit (11). Thus, in the second embodiment, the influence of the pressure loss in the refrigerant pipe can be also minimized, thereby improving an actual operational efficiency of the floor heating system (40).

### <<Third Embodiment>>

In the third embodiment, the refrigeration apparatus of the present invention serves as a so-called "heat-pump/chiller type" air conditioning system (50) in which a plurality of air conditioning units (6) are heat utilization targets.

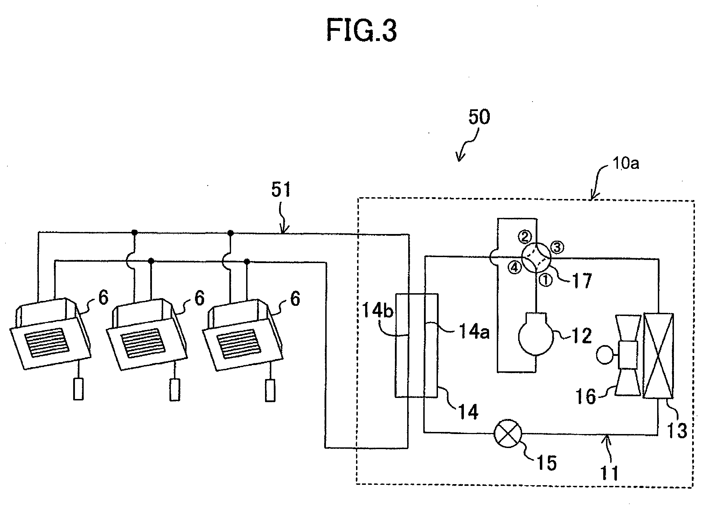

As illustrated in FIG. 3, a refrigerant circuit (11) of the third embodiment includes a four-way switching valve (17). The four-way switching valve (17) has first to fourth ports. The first port is connected to a discharge side of a compressor (12); the second port is connected to a suction side of the compressor (12); the third port is connected to one end of an air-heat exchanger (13); and the fourth port is connected to one end of a water-heat exchanger (14). The four-way switching valve (17) is switchable between a state in which the first port communicates with the fourth port with the second port communicating with the third port (state indicated by a solid line in FIG. 3), and a state in which the first port communicates with the third port with the second port communicating with the fourth port (state indicated by a dashed line in FIG. 3).

The air conditioning system (50) includes an air-conditioning-side circuit (51). The air-conditioning-side circuit (51) is connected to a second flow path (14b) of the water-heat exchanger (14), and serves as a heat medium circuit. In the air-conditioning-side circuit (51), the plurality of air conditioning units (6) are connected in parallel. The air conditioning units (6) are installed in a ceiling etc. of a room of a building etc. The air conditioning unit (6) serves as a fan coil unit including an indoor heat exchanger and an indoor fan. Further, the whole of the refrigerant circuit (11) is accommodated in a casing (10a) of a heat source unit.

In the third embodiment, in the air-conditioning-side circuit (51), water is used as a heat medium.

### Operation

In the air conditioning system (50), each of the air conditioning units (6) switches between a cooling operation and a heating operation.

In the cooling operation, the four-way switching valve (17) of the refrigerant circuit (11) is in the state indicated by the dashed line in FIG. 3. Consequently, in the refrigerant circuit (11), a refrigeration cycle is performed, in which the air-heat exchanger (13) serves as a condenser (radiator), and the water-heat exchanger (14) serves as an evaporator. That is, in the air-conditioning-side circuit (51), water flowing in the second flow path (14b) of the water-heat exchanger (14) is cooled by refrigerant flowing in a first flow path (14a). The water cooled in the water-heat exchanger (14) is sent to each of the air conditioning units (6). In the air conditioning unit (6), room air is cooled by the water. As described above, in the cooling operation, the water-heat exchanger (14) serves as a cooling heat exchanger for cooling water of the air-conditioning-side circuit (51). In addition, the air conditioning unit (6) serves as a cooler for cooling room air.

In the heating operation, the four-way switching valve (17) of the refrigerant circuit (11) is in the state indicated by the solid line in FIG. 3. Consequently, in the refrigerant circuit (11), a refrigeration cycle is performed, in which the water-heat exchanger (14) serves as the condenser (radiator), and the air-heat exchanger (13) serves as the evaporator. That is, in the air-conditioning-side circuit (51), water flowing in the second flow path (14b) of the water-heat exchanger (14) is heated by refrigerant flowing in the first flow path (14a). The water heated in the air-heat exchanger (13) is sent to each of the air conditioning units (6). In the air conditioning unit (6), room air is heated by the water. As described above, in the heating operation, the water-heat exchanger (14) serves as a heating heat exchanger for heating water of the air-conditioning-side circuit (51). In addition, the air conditioning unit (6) serves as a heater for heating room air.

### Advantages of Third Embodiment

In the third embodiment, the refrigerant containing HFO-1234yf is used as the refrigerant of the refrigerant circuit (11), thereby providing the air conditioning system (50) with a high COP. In addition, the whole of the refrigerant circuit (11) is accommodated in the casing (10a), and the refrigerant circuit (11) is separated from the heat medium circuits (20, 30, 51), thereby minimizing an influence of a pressure loss in the refrigerant circuit (11). Consequently, an actual operational efficiency of the floor heating system (40) can be improved.

### <<Other Embodiments>>

The foregoing embodiments may have the following configurations.
According to the present invention in the refrigerant mixture of 77-79 w t.-% of HFO-1234yf) and 23-21 wt.-% of HFC-32 used in the refrigerant ci rcuit (11), more preferably, the proportion of the HFO-1234yf is 78.2 wt.-%, and the proportion of the HFC-32 is 21.8 wt.-%.

The refrigeration apparatus of the present invention may be applied to other systems other than the hot-water supply system (10), the floor heating system (40), and the air conditioning system (50). Specifically, the present invention may be applied to, e.g., a window-type air conditioner in which the whole of a refrigerant circuit (11) is accommodated in a casing; and a roof-trap-type or central air conditioner in which cold/warm air is transferred through a duct. In addition, the present invention may be applied to a freezing/refrigeration apparatus (in particular, a refrigeration apparatus for cooling a refrigerator or an inside of a container for marine transportation etc.) in which the whole of a refrigerant circuit (11) is accommodated in a casing. Further, the present invention may be applied to a snow melting system for melting snow by a heat medium, a chiller unit only for cooling, a turbo refrigerator, etc. Air may be used as a heat medium instead of water. In particular, for low-temperature applications such as low-temperature chillers, water mixed with brine or antifreeze solution to lower a freezing point may be used as a heat medium. In addition, the heat source of the refrigerant circuit is air in the embodiments, but such a heat source may be a water heat source or an underground heat source.

The foregoing embodiments have been set forth merely for purposes of preferred examples in nature, and are not intended to limit the scope, applications, and use of the invention.

### INDUSTRIAL APPLICABILITY

As described above, the present invention is useful for the refrigeration apparatus which includes the refrigerant circuit in which the refrigeration cycle is performed, and which supplies warm/cold heat to predetermined heat utilization target(s).

## Claims

1. A refrigeration apparatus, comprising:
(i) a refrigerant circuit (11) suitable for performing a refrigeration cycle by circulating refrigerant, wherein
- a compressor (12),
- a heat-source-side heat exchanger (13),
- an expansion mechanism (15), and
- a utilization-side heat exchanger (14) are connected together;
(ii) in the refrigerant circuit (11), a refrigerant mixture of 77-79 wt.-% of HFO-1234yf and 23-21 wt.-% of HFC-32; and
(iii) a casing (10a) in which the whole of the refrigerant circuit is accommodated.

2. The refrigeration apparatus of claim 1, which further comprises, connected to the refrigerant circuit (11) through the utilization-side heat exchanger (14), a heat medium circuit (20, 51) for supplying a heat medium exchanging heat with refrigerant in the utilization-side heat exchanger (14) to a predetermined heat utilization target.

3. The refrigeration apparatus of claim 2, wherein the utilization-side heat exchanger (14) serves for heating the heat medium of the heat medium circuit (20) by the refrigerant mixture (ii).

4. The refrigeration apparatus of claim 3, which further comprises the heat utilization target which is a hot-water generator (3, 4) or a floor heater (5) for heating a floor surface.

5. The refrigeration apparatus of claim 2, wherein the utilization-side heat exchanger (14) serves for cooling the heat medium of the heat medium circuit (51) by the refrigerant mixture (ii).

6. The refrigeration apparatus of claim 5, which further comprises the heat utilization target which is a cooler (6) for generating cold heat.

7. The refrigeration apparatus of any of claims 2-6, wherein the heat medium in the heat medium circuit (20, 51) is water.

## Patentansprüche

1. Kühlvorrichtung, umfassend:
(i) einen Kühlkreislauf (11), geeignet zur Durchführung eines Kühlkreislaufs durch Umwälzen eines Kühlmittels, worin
- ein Kompressor (12),
- ein Wärmetauscher auf der Wärmequellenseite (13),
- ein Expansionsmechanismus (15) und
- ein Wärmetauscher auf der Verbraucherseite (14)
miteinander verbunden sind;
(ii) ein Kühlmittelgemisch aus 77-79 Gew.-% HFO-1234yf und 23-21 Gew.-% HFC-32 im Kühlkreislauf (11); und
(iii) ein Gehäuse (10a), in dem der gesamte Kühlkreislauf untergebracht ist.

2. Kühlvorrichtung gemäß Anspruch 1, die ferner einen über den Wärmetauscher auf der Verbraucherseite (14) zum Kühlkreislauf (11) verbundenen Wärmeträgerkreislauf (20, 51) zur Speisung eines Wärmeträgers umfasst, der Wärme mit dem Kühlmittel in dem Wärmetauscher auf der Verbraucherseite (14) austauscht, bis ein vorbestimmtes Wärmenutzungsziel erreicht ist.

3. Kühlvorrichtung gemäß Anspruch 2, worin der Wärmetauscher auf der Verbraucherseite (14) zum Heizen des Wärmeträgers des Wärmeträgerkreislaufs (20) durch das Kühlmittelgemisch (ii) dient.

4. Kühlvorrichtung gemäß Anspruch 3, die ferner das Wärmenutzungsziel umfasst, das ein Heißwassergenerator (3, 4) oder eine Fußbodenheizung (5) zur Heizung einer Fußbodenoberfläche ist.

5. Kühlvorrichtung gemäß Anspruch 2, worin der Wärmetauscher auf der Verbraucherseite (14) zur Kühlung des Wärmeträgers des Wärmeträgerkreislaufs (51) durch das Kühlmittelgemisch (ii) dient.

6. Kühlvorrichtung gemäß Anspruch 5, die ferner das Wärmenutzungsziel umfasst, das ein Kühler (6) zur Generierung von Kühlungswärme ist.

7. Kühlvorrichtung gemäß mindestens einem der Ansprüche 2-6, worin der Wärmeträger im Wärmeträgerkreislauf (20, 51) Wasser ist.

## Revendications

1. Appareil de réfrigération, comprenant :
(i) un circuit de réfrigérant (11) approprié pour effectuer un cycle de réfrigération en faisant circuler un réfrigérant, dans lequel
- un compresseur (12),
- un échangeur de chaleur côté source de chaleur (13),
- un mécanisme de détente (15), et
- un échangeur de chaleur côté utilisation (14)
sont reliés ensemble ;
(ii) dans le circuit de réfrigérant (11), un mélange réfrigérant de 77 à 79 % en poids de HFO-1234Yyf et 23 à 21 % en poids de HFC-32 ; et
(iii) un carter (10a) dans lequel tout le circuit de réfrigérant est logé.

2. Appareil de réfrigération selon la revendication 1, qui comprend en outre, relié au circuit de réfrigérant (11) par l'intermédiaire de l'échangeur de chaleur côté utilisation (14), un circuit de milieu thermique (20, 51) pour fournir un milieu thermique échangeant de la chaleur avec le réfrigérant dans l'échangeur de chaleur côté utilisation (14) à une cible d'utilisation de chaleur prédéterminée.

3. Appareil de réfrigération selon la revendication 2, dans lequel l'échangeur de chaleur côté utilisation (14) sert à chauffer le milieu thermique du circuit de milieu thermique (20) par le mélange réfrigérant (ii).

4. Appareil de réfrigération selon la revendication 3, qui comprend en outre la cible d'utilisation de chaleur qui est un générateur d'eau chaude (3, 4) ou un dispositif de chauffage de plancher (5) pour chauffer une surface de plancher.

5. Appareil de réfrigération selon la revendication 2, dans lequel l'échangeur de chaleur côté utilisation (14) sert à refroidir le milieu thermique du circuit de milieu thermique (51) par le mélange réfrigérant (ii).

6. Appareil de réfrigération selon la revendication 5, qui comprend en outre la cible d'utilisation de chaleur qui est un refroidisseur (6) pour produire de la chaleur froide.

7. Appareil de réfrigération selon l'une quelconque des revendications 2 à 6, dans lequel le milieu thermique dans le circuit de milieu thermique (20, 51) est de l'eau.
